# EUROPEAN PATENT APPLICATION

(11) **EP 4 837 646 A2**
(43) Date of publication of application: **11.11.2026**
(21) Application number: 26168793.3
(22) Date of filing: 27.03.2026
(51) Int. Cl.: A63F 13/98, A63F 13/24, A63F 13/92

(54) **GAMEPAD PROTECTIVE CASE**

(30) Priority: 08.05.2025 CN 202520890073 U; 15.08.2025 CN 202521738465 U
(71) Applicant: Shenzhen DeOne Innovation Technology Co., Ltd, Shenzhen, Guangdong 518129 (CN)
(72) Inventor: HE, Beijing, Shenzhen, 518129 (CN); JIANG, Dezhong, Shenzhen, 518129 (CN); XIE, Huayong, Shenzhen, 518129 (CN)
(74) Representative: Chung, Hoi Kan

(57) **Abstract**

The present disclosure relates to the technical field of gamepads and, in particular, to a gamepad protective case. The gamepad protective case includes a case body and a grip member. The case body is configured to form a receiving cavity. A gamepad is detachably mounted in the receiving cavity. The grip member is arranged on one side of the case body in a first direction, and is detachably connected to the case body. Through the detachable connection between the grip member and the case body, as well as the detachable connection between the case body and the gamepad, users can replace the grip member according to personal needs to meet different users' requirements for the grip member of the gamepad. When the user uses the gamepad equipped with the gamepad protective case, the grip member can fit the user's palm or fingers, thereby improving the user experience.

## Description

### TECHNICAL FIELD

The present disclosure relates to the technical field of gamepads and, in particular, to a gamepad protective case.

### BACKGROUND

Most game consoles on the market are split-type, where a main unit and a gamepad are detachably connected. A user connects the main unit to a TV or a display screen, and then plays the game by means of the gamepad.

Generally, a gamepad is provided with a raised grip portion in a first direction. However, some gamepads have a flat surface on one side in the first direction. When such a gamepad is used alone, the user's hand is not supported by the grip portion, resulting in a poor user gaming experience.

There are gamepad protective cases provided with a grip portion on the market, but the grip portion is fixed. Due to differences among users, grip portions of different heights or thicknesses are needed to fit the user's palm or fingers. A gamepad protective case with a fixed grip portion cannot be adapted to users having different requirements for the grip portion.

### SUMMARY

To overcome the defects and deficiencies of the prior art, the present disclosure provides a gamepad protective case. Through the detachable connection between a grip member and a case body, users can replace the grip member to meet personal needs, thereby improving the user experience.

To achieve the above purpose, the technical solution adopted by the present disclosure is as follows: A gamepad protective case includes a case body and a grip member; the case body is configured to form a receiving cavity, and a gamepad is detachably mounted in the receiving cavity; the grip member is arranged on one side of the case body in a first direction, and is detachably connected to the case body.

Preferably, a first sliding rail module is arranged on a side of the grip member that is close to the case body; a second sliding rail module is arranged on a side of the case body that is close to the grip member; the first sliding rail module is connected to the second sliding rail module by means of sliding rails; the grip member is detachably connected to the case body; the grip member is mounted on the case body in a second direction which is perpendicular to the first direction.

Preferably, the first sliding rail module includes two first sliding rail portions which are arranged symmetrically with respect to the second direction; the second sliding rail module includes two second sliding rail portions which are arranged symmetrically with respect to the second direction; the two first sliding rail portions are respectively connected to the two second sliding rail portions by means of sliding rails, such that the grip member is detachably connected to the case body.

Preferably, each first sliding rail portion includes a first sliding rail main body and a first transverse limiting portion, and the first sliding rail main body is arranged between the first transverse limiting portion and the grip member; each second sliding rail portion includes a second sliding rail main body and a second transverse limiting portion, and the second sliding rail main body is arranged between the second transverse limiting portion and the case body; the first transverse limiting portions extend at least partially toward the second sliding rail main bodies, and the second transverse limiting portions extend at least partially toward the first sliding rail main bodies; when the grip member is mounted on the case body, the first transverse limiting portions are fitted into spaces between the second transverse limiting portions and the case body, such that the first sliding rail portions and the second sliding rail portions are connected by means of sliding rails.

Preferably, a first longitudinal limiting portion is provided at an end of each first sliding rail main body in a direction opposite to the second direction, and extends in an extending direction of the corresponding first transverse limiting portion; when the grip member is mounted on the case body, an end of each second transverse limiting portion in the direction opposite to the second direction abuts against the corresponding first longitudinal limiting portion.

Preferably, a second longitudinal limiting portion is provided at an end of each second sliding rail main body in the second direction, and extends in an extending direction of the corresponding second transverse limiting portion; when the grip member is mounted on the case body, an end of each first transverse limiting portion in the second direction abuts against the corresponding second longitudinal limiting portion.

Preferably, a guide portion is provided at an end of each second sliding rail main body in the direction opposite to the second direction, and extends at least partially in the direction opposite to the second direction; in a case where the two second transverse limiting portions extend toward each other, each guide portion extends at least partially in a direction away from the other second sliding rail portion; in a case where the two second transverse limiting portions extend away from each other, each guide portion extends at least partially in a direction close to the other second sliding rail portion.

Preferably, the gamepad protective case further includes a latching module; the latching module is arranged on the side of the grip member that is close to the case body; the latching module is provided with a catching groove which is open toward the case body; a latching protrusion is arranged on the side of the case body which is close to the grip member; when the grip member is mounted on the case body in the second direction, the latching protrusion is fitted into the catching groove to limit displacement of the grip member in the second direction.

Preferably, the latching module includes a connecting portion and a latching portion; the connecting portion is arranged on the side of the grip member that is close to the case body; the latching portion is arranged at an end of the connecting portion that is close to the case body and extends at least partially in the second direction; the catching groove is arranged in the latching portion and is located close to an end of the latching portion that is away from the connecting portion.

Preferably, in the second direction, the dimension, in the first direction, of the end of the latching portion that is away from the connecting portion is gradually reduced.

Based on the above technical solutions, the beneficial effects of the present disclosure are as follows: Through the detachable connection between the grip member and the case body, as well as the detachable connection between the case body and the gamepad, users can replace the grip member according to personal needs to meet different users' requirements for the grip member of the gamepad. When the user uses the gamepad equipped with the gamepad protective case, the grip member can fit the user's palm or fingers, thereby improving the user experience.

### BRIEF DESCRIPTION OF DRAWINGS

In order to more clearly illustrate the technical solutions in the embodiments of the present disclosure or the prior art, the following is a brief introduction to the drawings required for the description of the embodiments or the prior art. Obviously, the drawings described below merely illustrate some embodiments of the present disclosure. For those of ordinary skill in the art, other drawings may be obtained on the basis of the following ones without creative labor.
FIG. 1 is a schematic structural view of a gamepad protective case according to an embodiment of the present disclosure.
FIG. 2 is an exploded schematic view of the gamepad protective case according to an embodiment of the present disclosure.
FIG. 3 is a schematic structural view of a case body according to an embodiment of the present disclosure.
FIG. 4 is a schematic structural view of the case body from another perspective according to an embodiment of the present disclosure.
FIG. 5 is a schematic structural view of a grip member according to an embodiment of the present disclosure.
FIG. 6 is a cross-sectional view taken along A-A' of FIG. 1.
FIG. 7 is a cross-sectional view taken along B-B' of FIG. 1.
FIG. 8 is a cross-sectional view taken along C-C' of FIG. 1.
FIG. 9 is a cross-sectional view taken along D-D' of FIG. 1.

### Reference numerals:

100. gamepad protective case; 10. case body; 11. second sliding rail module; 111. second sliding rail portion; 1111. second sliding rail main body; 1112. second transverse limiting portion; 1113. second longitudinal limiting portion; 1114. guide portion; 13. latching protrusion; 131. fifth guide inclined surface; 132. sixth guide inclined surface; 14. button avoidance hole; 15. case main body; 16. case extension portion; 17. case limiting portion; 20. grip member; 21. first sliding rail module; 211. first sliding rail portion; 2111. first sliding rail main body; 21111. third guide inclined surface; 2112. first transverse limiting portion; 2113. first longitudinal limiting portion; 2114. sliding rail reinforcing rib; 23. cavity; 30. receiving cavity; 40. latching module; 41. connecting portion; 43. latching portion; 431. second guide inclined surface; 432. first guide inclined surface; 44. catching groove; 46. first latching reinforcing rib; 47. second latching reinforcing rib; X. first direction; Y. second direction; Z. third direction.

### DETAILED DESCRIPTION OF THE EMBODIMENTS

The present disclosure is described in further detail below in conjunction with the accompanying drawings.

The specific embodiment is merely used for explaining the present disclosure rather than limiting the present disclosure. Those skilled in the art may make modifications to this embodiment without creative contribution after reading this specification. Such modifications shall be protected by the Patent Law, provided that they fall within the scope of the claims of the present disclosure.

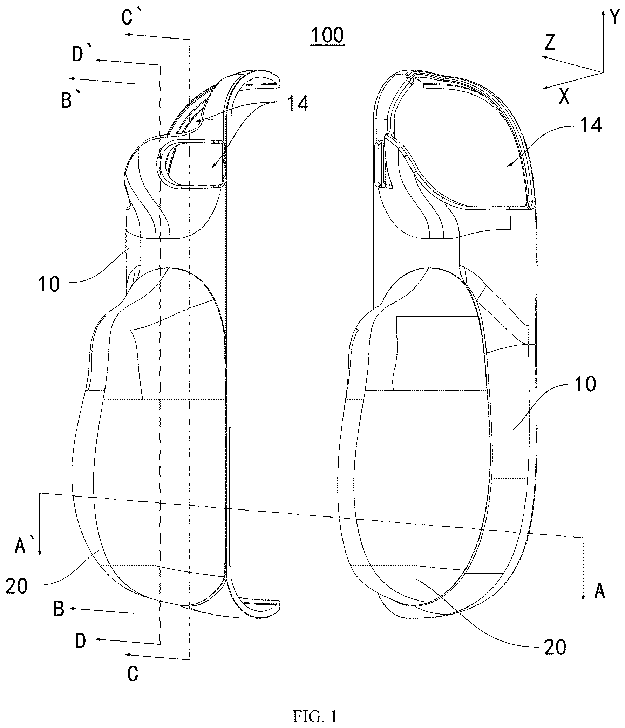

As shown in FIGS. 1-2, this embodiment relates to a gamepad protective case 100, including a case body 10 and a grip member 20. The case body 10 is configured to form a receiving cavity 30, and a gamepad is detachably mounted in the receiving cavity 30. The grip member 20 is arranged on one side of the case body 10 in a first direction X, and is detachably connected to the case body 10.

In this embodiment, the grip member 20 is connected to the case body 10 by means of sliding rails.

In other embodiments, the grip member 20 is in snap-fit connection with the case body 10 by means of a fastener and a catching groove 44, so as to realize detachable connection between the grip member 20 and the case body 10. Alternatively, the grip member 20 is threadedly connected to the case body 10 to realize detachable connection. Alternatively, the grip member 20 is detachably connected to the case body 10 by adhesive bonding. Adhesive bonding includes direct bonding between the grip member 20 and the case body 10 by glue, and the bonding between the grip member 20 and the case body 10 may also be realized by means of Velcro arranged between the grip member 20 and the case body 10. Alternatively, the grip member 20 is magnetically connected to the case body 10 to realize detachable connection.

In this embodiment, the case body 10 includes a case main body 15, a case extension portion 16, and a case limiting portion 17. The case extension portion 16 is arranged along an edge of the case main body 15 and extends at least partially in a direction opposite to the first direction X. The case extension portion 16 and the case main body 15 are configured to form the receiving cavity 30 together. The case limiting portion 17 is arranged at an end of the case extension portion 16 that is away from the case main body 15, and is configured to engage with an edge of the gamepad on a side in the direction opposite to the first direction X, such that the gamepad is detachably fitted in the receiving cavity 30.

In an implementation mode, two gamepads are provided, which are respectively mounted at two opposite ends of a main unit of a game console. An end of one gamepad that is close to the other gamepad is provided with a mounting end for being inserted into the main unit of the game console. The gamepad protective case 100 is not provided with the case extension portion 16 or the case limiting portion 17 in a direction from one gamepad toward the other gamepad, so as to facilitate insertion of the mounting end into the main unit of the game console.

In addition, the case main body 15 and the case extension portion 16 are provided with button avoidance holes 14 for avoiding buttons on the gamepad.

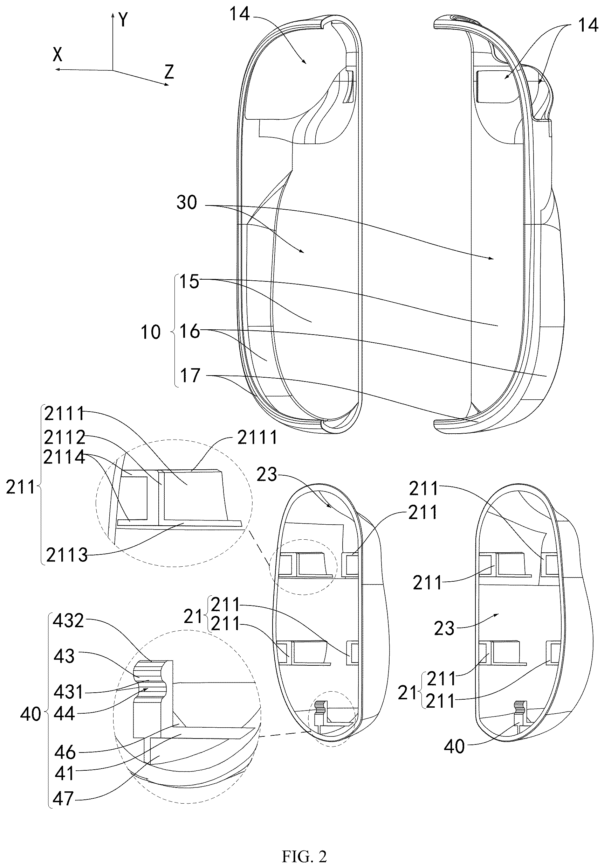

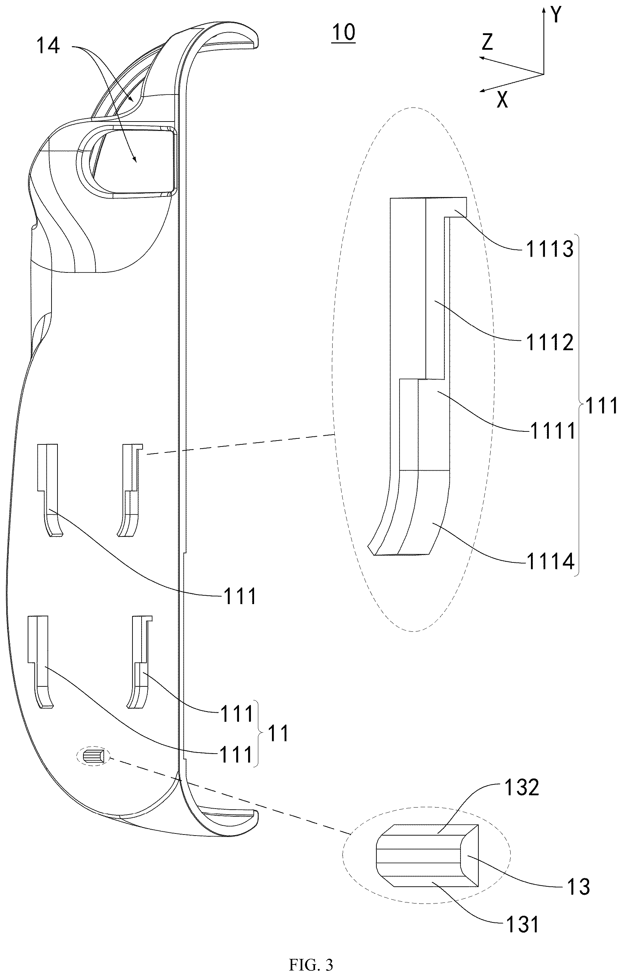

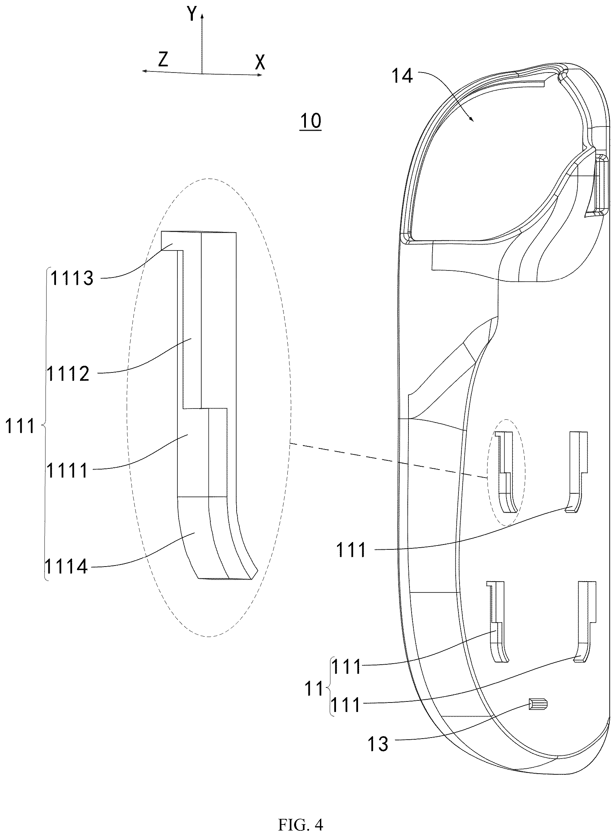

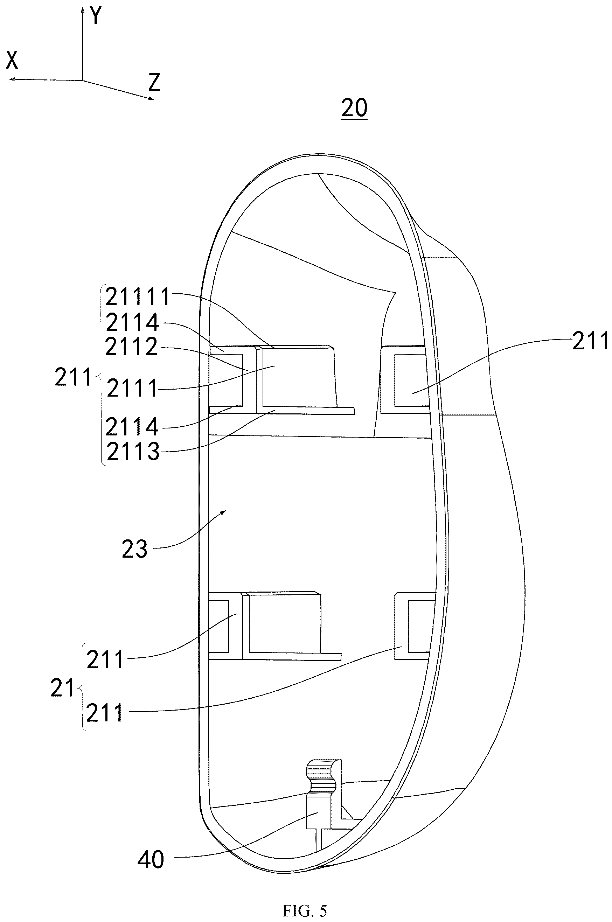

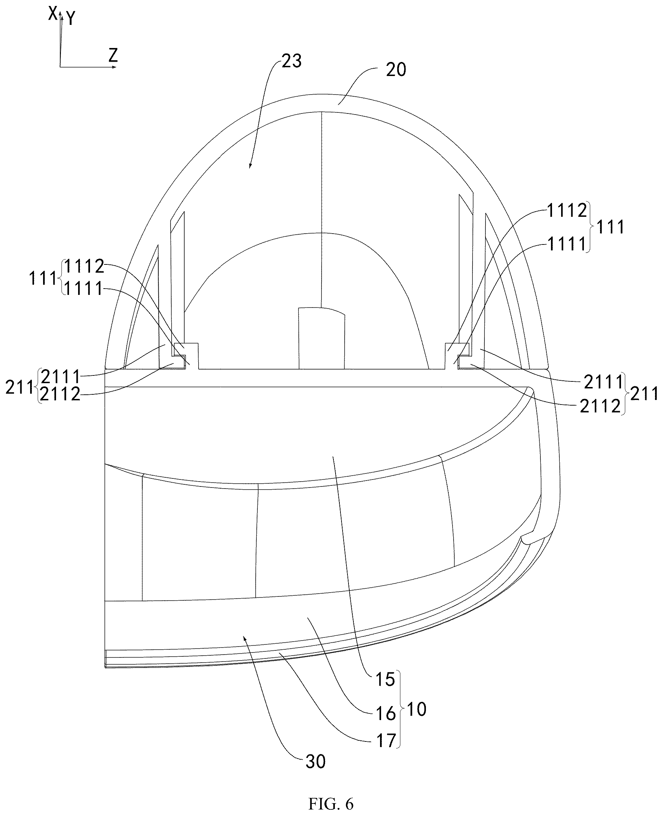

As shown in FIGS. 2-6, a first sliding rail module 21 is arranged on a side of the grip member 20 that is close to the case body 10. A second sliding rail module 11 is arranged on a side of the case body 10 that is close to the grip member 20. The first sliding rail module 21 is connected to the second sliding rail module 11 by means of sliding rails, so as to realize detachable connection between the grip member 20 and the case body 10. In an implementation mode, the grip member 20 is mounted on the case body 10 in a second direction Y which is perpendicular to the first direction X.

As shown in FIGS. 2-6, the first sliding rail module 21 includes two first sliding rail portions 211 which are arranged symmetrically with respect to the second direction Y. The second sliding rail module 11 includes two second sliding rail portions 111 which are arranged symmetrically with respect to the second direction Y. The two first sliding rail portions 211 are respectively connected to the two second sliding rail portions 111 by means of sliding rails, such that the grip member 20 is detachably connected to the case body 10.

In this embodiment, the first direction X is a thickness direction of the case body 10, and the second direction Y is a length direction of the case body 10.

In other embodiments, the first direction X is the thickness direction of the case body 10, and the second direction Y is a width direction of the case body 10.

In an implementation mode, when each first transverse limiting portion 2112 is fitted into a space between a corresponding second transverse limiting portion 1112 and the case body 10, displacement of the grip member 20 in the first direction X and a third direction Z is limited. The third direction Z is perpendicular to the first direction X and perpendicular to the second direction Y.

In addition, the first sliding rail portions 211 and the second sliding rail portions 111 are in interference fit, so as to limit displacement of the grip member 20 in the second direction Y, thereby preventing the first transverse limiting portions 2112 from disengaging from the spaces between the second transverse limiting portions 1112 and the case body 10.

In a further implementation mode, a side of each first transverse limiting portion 2112 that is close to the corresponding second transverse limiting portion 1112 is fitted against the second transverse limiting portion 1112, and each first sliding rail main body 2111 deforms in a direction away from the corresponding second sliding rail main body 1111, and/or each second sliding rail main body 1111 deforms in a direction away from the corresponding first sliding rail main body 2111, such that the first sliding rail portions 211 and the second sliding rail portions 111 are in interference fit. Further, displacement of the grip member 20 in the third direction Z is limited, and displacement of the grip member 20 in the second direction Y and the first direction X is also limited.

Specifically, since the grip member 20 is a plastic part which is fabricated by an injection molding process. During fabrication, the thickness needs to be kept as uniform as possible to reduce defects on the surface of the grip member 20. Therefore, a cavity 23 is formed on a side of the grip member 20 that is close to the case body 10, so that the thickness of the grip member 20 remains uniform; the first sliding rail portions 211 and the second sliding rail portions 111 are both arranged in the cavity 23, and the two first sliding rail main bodies 2111 both extend toward the case body 10, such that when the grip member 20 is mounted on the case body 10, the first transverse limiting portions 2112 are fitted into spaces between the second transverse limiting portions 1112 and the case body 10.

In a further implementation mode, two first sliding rail reinforcing ribs 2114 are arranged on a side of each first sliding rail main body 2111 which faces away from the other first sliding rail main body 2111, and the two first sliding rail reinforcing ribs 2114 are respectively arranged at two opposite ends of the first sliding rail main body 2111 in the second direction Y, and both extend in a direction away from the other first sliding rail main body 2111 to a side wall of the cavity 23. The arrangement of the first sliding rail reinforcing ribs 2114 prevents an end of each first sliding rail main body 2111 that is away from the grip member 20 from excessively deforming in a direction facing away from the other first sliding rail main body 2111, thereby ensuring effective cooperation between the first sliding rail portions 211 and the second sliding rail portions 111, and improving the stability of connection between the grip member 20 and the case body 10.

As shown in FIGS. 2-6, each first sliding rail portion 211 includes a first sliding rail main body 2111 and a first transverse limiting portion 2112. The first sliding rail main body 2111 is arranged between the first transverse limiting portion 2112 and the grip member 20. Each second sliding rail portion 111 includes a second sliding rail main body 1111 and a second transverse limiting portion 1112. The second sliding rail main body 1111 is arranged between the second transverse limiting portion 1112 and the case body 10. The first transverse limiting portions 2112 extend at least partially toward the second sliding rail main bodies 1111, and the second transverse limiting portions 1112 extend at least partially toward the first sliding rail main bodies 2111. When the grip member 20 is mounted on the case body 10, the first transverse limiting portions 2112 are fitted into the spaces between the second transverse limiting portions 1112 and the case body 10, such that the first sliding rail portions 211 and the second sliding rail portions 111 are connected by means of sliding rails.

In a first embodiment, as shown in FIGS. 2-6, the first sliding rail module 21 includes two first sliding rail portions 211. Each first sliding rail portion 211 includes a first sliding rail main body 2111 and a first transverse limiting portion 2112. One end of the first sliding rail main body 2111 is connected to the grip member 20, and the other end thereof is connected to the first transverse limiting portion 2112. The two first transverse limiting portions 2112 extend toward each other. The second sliding rail module 11 includes two second sliding rail portions 111. Each second sliding rail portion 111 includes a second sliding rail main body 1111 and a second transverse limiting portion 1112. One end of the second sliding rail main body 1111 is connected to the case body 10, and the other end thereof is connected to the second transverse limiting portion 1112. The two second transverse limiting portions 1112 extend away from each other. When the grip member 20 is mounted on the case body 10 in the second direction Y, the two first transverse limiting portions 2112 are respectively fitted into spaces between the two second transverse limiting portions 1112 and the case body 10, such that the first sliding rail module 21 and the second sliding rail module 11 are connected by means of sliding rails, and the grip member 20 is detachably connected to the case body 10.

In a second embodiment, the first sliding rail module 21 includes one first sliding rail portion 211. The first sliding rail portion 211 includes a first sliding rail main body 2111 and two first transverse limiting portions 2112. One end of the first sliding rail main body 2111 is connected to the grip member 20. The two first transverse limiting portions 2112 are both arranged at an end of the first sliding rail main body 2111 that is away from the grip member 20, and face each other. The second sliding rail module 11 includes two second sliding rail portions 111. Each second sliding rail portion 111 includes a second sliding rail main body 1111 and a second transverse limiting portion 1112. One end of the second sliding rail main body 1111 is connected to the case body 10, and the other end thereof is connected to the second transverse limiting portion 1112. The two second transverse limiting portions 1112 extend toward each other. When the grip member 20 is mounted on the case body 10 in the second direction Y, the two first transverse limiting portions 2112 are respectively fitted into spaces between the two second transverse limiting portions 1112 and the case body 10, such that the first sliding rail module 21 and the second sliding rail module 11 are connected by means of sliding rails, and the grip member 20 is detachably connected to the case body 10.

In a third embodiment, the first sliding rail module 21 includes two first sliding rail portions 211. Each first sliding rail portion 211 includes a first sliding rail main body 2111 and a first transverse limiting portion 2112. One end of the first sliding rail main body 2111 is connected to the grip member 20, and the other end thereof is connected to the first transverse limiting portion 2112. The two first transverse limiting portions 2112 extend away from each other. The second sliding rail module 11 includes two second sliding rail portions 111. Each second sliding rail portion 111 includes a second sliding rail main body 1111 and a second transverse limiting portion 1112. One end of the second sliding rail main body 1111 is connected to the case body 10, and the other end thereof is connected to the second transverse limiting portion 1112. The two second transverse limiting portions 1112 extend toward each other. When the grip member 20 is mounted on the case body 10 in the second direction Y, the two first transverse limiting portions 2112 are respectively fitted into spaces between the two second transverse limiting portions 1112 and the case body 10, such that the first sliding rail module 21 and the second sliding rail module 11 are connected by means of sliding rails, and the grip member 20 is detachably connected to the case body 10.

In a fourth embodiment, the first sliding rail module 21 includes two first sliding rail portions 211. Each first sliding rail portion 211 includes a first sliding rail main body 2111 and a first transverse limiting portion 2112. One end of the first sliding rail main body 2111 is connected to the grip member 20, and the other end thereof is connected to the first transverse limiting portion 2112. The two first transverse limiting portions 2112 extend toward each other. The second sliding rail module 11 includes one second sliding rail portion 111. The second sliding rail portion 111 includes a second sliding rail main body 1111 and two second transverse limiting portions 1112. One end of the second sliding rail main body 1111 is connected to the case body 10, and the other end thereof is connected to the second transverse limiting portions 1112. The two second transverse limiting portions 1112 are arranged to face away from each other. When the grip member 20 is mounted on the case body 10 in the second direction Y, the two first transverse limiting portions 2112 are respectively fitted into spaces between the two second transverse limiting portions 1112 and the case body 10, such that the first sliding rail module 21 and the second sliding rail module 11 are connected by means of sliding rails, and the grip member 20 is detachably connected to the case body 10.

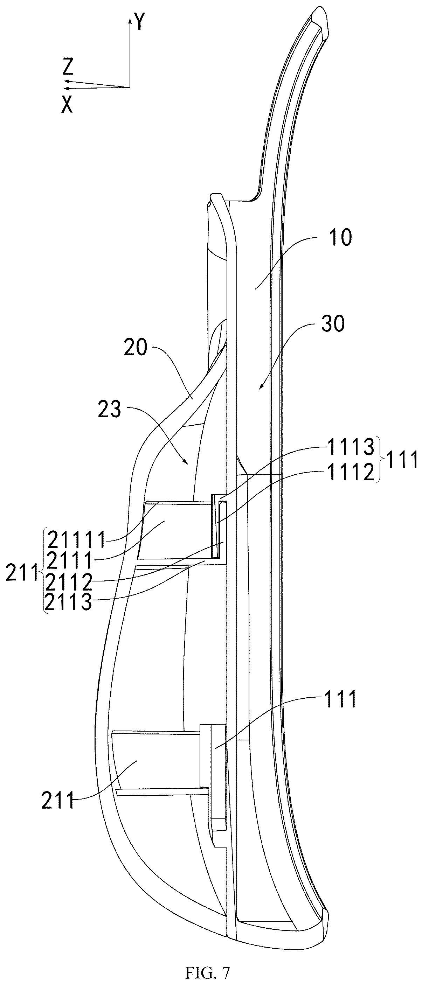

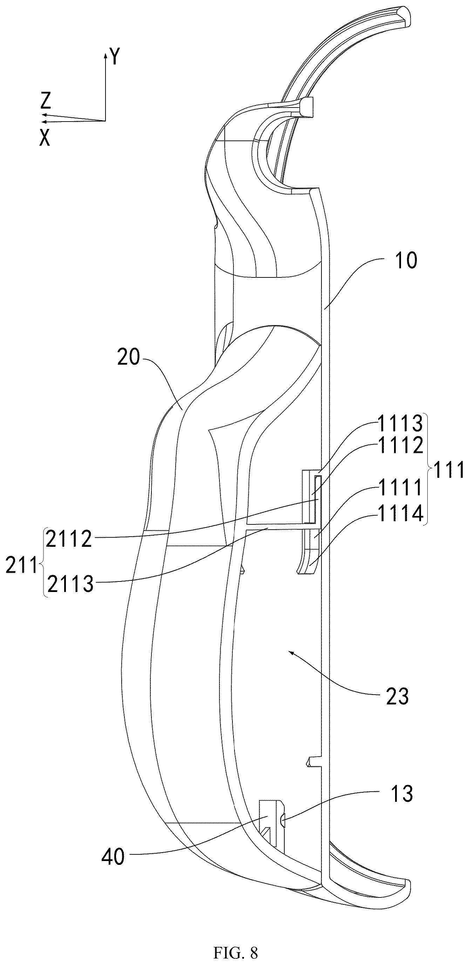

As shown in FIGS. 2-8, in the first embodiment, a first longitudinal limiting portion 2113 is provided at an end of each first sliding rail main body 2111 in a direction opposite to the second direction Y, and extends in an extending direction of the corresponding first transverse limiting portion 2112. When the grip member 20 is mounted on the case body 10, an end of each second transverse limiting portion 1112 in the direction opposite to the second direction Y abuts against the corresponding first longitudinal limiting portion 2113, so as to prevent excessive displacement of the grip member 20 in the second direction Y, thereby preventing the first transverse limiting portions 2112 from disengaging from the spaces between the second transverse limiting portions 1112 and the case body 10, and improving the stability of connection between the grip member 20 and the case body 10.

As shown in FIGS. 2-8, in the second embodiment, a second longitudinal limiting portion 1113 is provided at an end of each second sliding rail main body 1111 in the second direction Y, and extends in an extending direction of the corresponding second transverse limiting portion 1112. When the grip member 20 is mounted on the case body 10, an end of each first transverse limiting portion 2112 in the second direction Y abuts against the corresponding second longitudinal limiting portion 1113, so as to prevent excessive displacement of the grip member 20 in the second direction Y, thereby preventing the first transverse limiting portions 2112 from disengaging from the spaces between the second transverse limiting portions 1112 and the case body 10, and improving stability of connection between the grip member 20 and the case body 10.

As shown in FIGS. 2-8, in the third embodiment, a first longitudinal limiting portion 2113 is provided at an end of each first sliding rail main body 2111 in the direction opposite to the second direction Y. The first longitudinal limiting portion 2113 extends in an extending direction of the corresponding first transverse limiting portion 2112. A second longitudinal limiting portion 1113 is provided at an end of each second sliding rail main body 1111 in the second direction Y. The second longitudinal limiting portion 1113 extends in an extending direction of the corresponding second transverse limiting portion 1112.

When the grip member 20 is mounted on the case body 10, an end of each second transverse limiting portion 1112 in the direction opposite to the second direction Y abuts against the corresponding first longitudinal limiting portion 2113, and an end of each first transverse limiting portion 2112 in the second direction Y abuts against the corresponding second longitudinal limiting portion 1113, so as to prevent excessive displacement of the grip member 20 in the second direction Y, thereby preventing the first transverse limiting portions 2112 from disengaging from the spaces between the second transverse limiting portions 1112 and the case body 10, and improving stability of connection between the grip member 20 and the case body 10.

A guide portion 1114 is provided at an end of each second sliding rail main body 1111 in a direction opposite to the second direction Y and extends at least partially in the direction opposite to the second direction Y.

In the first embodiment, the two second transverse limiting portions 1112 extend toward each other, and each guide portion 1114 extends at least partially in a direction away from the other second sliding rail portion 111.

During assembly of the grip member 20 on the case body 10 in the second direction Y, since the distance between an end of one guide portion 1114 that is away from the corresponding second sliding rail main body 1111 and an end of the other guide portion 1114 that is away from the corresponding second sliding rail main body 1111 is less than the distance between an end of one guide portion 1114 that is close to the corresponding second sliding rail main body 1111 and an end of the other guide portion 1114 that is close to the corresponding second sliding rail main body 1111, the first transverse limiting portions 2112 first abut against the ends of the guide portions 1114 that are away from the second sliding rail main bodies 1111. As the grip member 20 moves in the second direction Y, each first sliding rail main body 2111 deforms along the shape of the corresponding guide portion 1114 in a direction facing away from the corresponding second sliding rail main body 1111, i.e., in a direction facing away from the other first sliding rail main body 2111, so that the first transverse limiting portions 2112 are smoothly fitted into the spaces between the second transverse limiting portions 1112 and the case body 10.

In addition, in a direction that each first sliding rail main body 2111 points to the other first sliding rail main body 2111, the dimension of the first sliding rail main body 2111 in the second direction Y is gradually reduced to form a third guide inclined surface 21111. Each third guide inclined surface 21111 is arranged close to an end of the corresponding first sliding rail main body 2111 in the second direction Y.

During assembly of the grip member 20 on the case body 10 in the second direction Y, the guide portions 1114 first abut against the third guide inclined surfaces 21111, so that each first sliding rail main body 2111 deforms along the shape of the corresponding guide portion 1114 in a direction facing away from the other first sliding rail main body 2111, i.e., in a direction facing away from the corresponding second sliding rail main body 1111. Consequently, the first transverse limiting portions 2112 are smoothly fitted into the spaces between the second transverse limiting portions 1112 and the case body 10.

In the second embodiment, the two second transverse limiting portions 1112 extend away from each other, and each guide portion 1114 extends at least partially in a direction close to the other second sliding rail portion 111.

During assembly of the grip member 20 on the case body 10 in the second direction Y, since the distance between an end of one guide portion 1114 that is away from the corresponding second sliding rail main body 1111 and an end of the other guide portion 1114 that is away from the corresponding second sliding rail main body 1111 is greater than the distance between an end of one guide portion 1114 that is close to the corresponding second sliding rail main body 1111 and an end of the other guide portion 1114 that is close to the corresponding second sliding rail main body 1111, the first transverse limiting portions 2112 first abut against the ends of the guide portions 1114 that are away from the second sliding rail main bodies 1111. As the grip member 20 moves in the second direction Y, each first sliding rail main body 2111 deforms along the shape of the corresponding guide portion 1114 in a direction facing away from the corresponding second sliding rail main body 1111, i.e., in a direction close to the other first sliding rail main body 2111, so that the first transverse limiting portions 2112 are smoothly fitted into the spaces between the second transverse limiting portions 1112 and the case body 10.

In this embodiment, the grip member 20 is provided with two first sliding rail modules 21 which are spaced apart in the second direction Y. The case body 10 is provided with two second sliding rail modules 11 which are spaced apart in the second direction Y. The above arrangement reduces the dimensions of the first sliding rail portions 211 and the second sliding rail portions 111 in the second direction Y, thereby reducing material consumption and improving the stability of the connection between the grip member 20 and the case body 10.

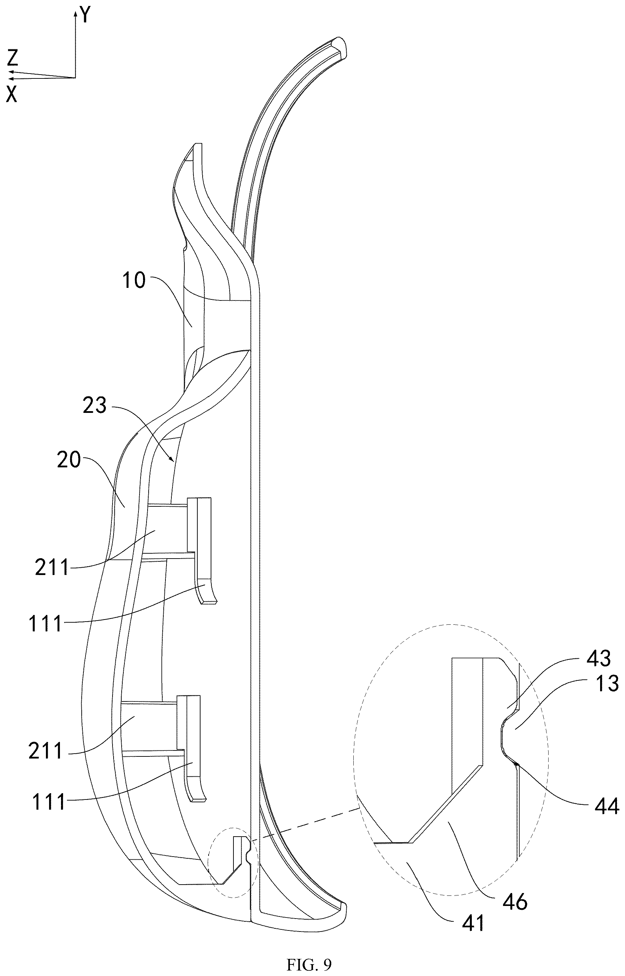

As shown in FIGS. 2-5 and 9, the gamepad protective case 100 further includes a latching module 40. The latching module 40 is arranged on a side of the grip member 20 that is close to the case body 10. The latching module 40 is provided with a catching groove 44 which is open toward the case body 10. A latching protrusion 13 is arranged on a side of the case body 10 which is close to the grip member 20. When the grip member 20 is mounted on the case body 10 in the second direction Y, the latching protrusion 13 is fitted into the catching groove 44 to limit displacement of the grip member 20 in the second direction Y.

In an implementation mode, the latching module 40 includes a connecting portion 41 and a latching portion 43. The connecting portion 41 is arranged on the side of the grip member 20 that is close to the case body 10. The latching portion 43 is arranged at an end of the connecting portion 41 that is close to the case body 10 and extends at least partially in the second direction Y. The catching groove 44 is arranged in the latching portion 43 and is located close to an end of the latching portion 43 that is away from the connecting portion 41, so that the end of the latching portion 43 that is away from the connecting portion 41 can deform in a direction away from the case body 10, thereby facilitating the fitting of the latching protrusion 13 into the catching groove 44.

When the grip member 20 is mounted on the case body 10 along the second direction Y, the latching protrusion 13 is fitted into the catching groove 44 to limit the displacement of the grip member 20 in the second direction Y, thereby limiting displacement of the grip member 20 in the second direction Y or in a direction opposite to the second direction Y, preventing the first transverse limiting portions 2112 from disengaging from the spaces between the second transverse limiting portions 1112 and the case body 10, and improving the stability of connection between the grip member 20 and the case body 10.

As shown in FIGS. 2-5 and 9, in the second direction Y, the dimension, in the first direction X, of the end of the latching portion 43 that is away from the connecting portion 41 is gradually reduced to form a first guide inclined surface 432. When the grip member 20 is mounted on the case body 10 in the second direction Y, the latching protrusion 13 first comes into contact with the first guide inclined surface 432 to guide deformation of the latching portion 43, thereby facilitating the fitting of the latching protrusion 13 into the catching groove 44.

In an implementation mode, in the second direction Y, the dimension, in the first direction X, of the latching protrusion 13 gradually increases and then gradually decreases, so as to form a sixth guide inclined surface 132 and a fifth guide inclined surface 131. The sixth guide inclined surface 132 is close to an end of the latching protrusion 13 in the direction opposite to the second direction Y, and the fifth guide inclined surface 131 is close to an end of the latching protrusion 13 in the second direction Y.

Due to the arrangement of the fifth guide inclined surface 131, when the grip member 20 is mounted on the case body 10 in the second direction Y, the latching portion 43 first abuts against the fifth guide inclined surface 131 (that is, the first guide inclined surface 432 first abuts against the fifth guide inclined surface 131), so as to guide deformation of the latching portion 43, thereby facilitating the fitting of the latching protrusion 13 into the catching groove 44.

As shown in FIGS. 2-5 and 9, in the second direction Y, the dimension, in the first direction X, of a portion of the latching portion 43 that is close to the first guide inclined surface 432 gradually increases to form a second guide inclined surface 431. The second guide inclined surface 431 is located on a side wall of the catching groove 44 that is close to the first guide inclined surface 432. During the detachment of the grip member 20 from the case body 10, the grip member 20 is moved in the direction opposite to the second direction Y, and the latching protrusion 13 first comes into contact with the second guide inclined surface 431 to guide deformation of the latching portion 43, so that the latching protrusion 13 is disengaged from the catching groove 44, thereby further facilitating detachment of the grip member 20 from the case body 10.

Due to the arrangement of the sixth guide inclined surface 132, during the detachment of the grip member 20 from the case body 10, the grip member 20 is moved in the direction opposite to the second direction Y, and the sixth guide inclined surface 132 first comes into contact with the second guide inclined surface 431 to guide deformation of the latching portion 43, so that the latching protrusion 13 is disengaged from the catching groove 44, thereby further facilitating detachment of the grip member 20 from the case body 10.

As shown in FIGS. 2-5 and 9, a first latching reinforcing rib 46 is arranged on one side of the connecting portion 41 in the second direction Y. The first latching reinforcing rib 46 extends at least partially in a direction opposite to the first direction X to the latching portion 43. The arrangement of the first latching reinforcing rib 46 prevents excessive deformation of the latching portion 43, and ensures that the latching protrusion 13 is effectively fitted into the catching groove 44, thereby further limiting displacement of the grip member 20 in the second direction Y, and improving the stability of the connection between the grip member 20 and the case body 10.

As shown in FIGS. 2-5 and 9, a second latching reinforcing rib 47 is arranged on one side of the connecting portion 41 in the direction opposite to the second direction Y. The second latching reinforcing rib 47 extends at least partially in the direction opposite to the second direction Y to the grip member 20, i.e., to the side wall of the cavity 23. The arrangement of the second latching reinforcing rib 47 prevents excessive deformation of the connecting portion 41 in the direction opposite to the second direction Y during assembly of the grip member 20 to the case body 10, and ensures that the latching protrusion 13 is effectively fitted into the catching groove 44, thereby further limiting displacement of the grip member 20 in the second direction Y, and improving the stability of the connection between the grip member 20 and the case body 10.

The foregoing descriptions are merely used for illustrating the technical solutions of the present disclosure rather than limiting the technical solutions of the present disclosure. Any other modifications or equivalent replacements made by those of ordinary skill in the art to the technical solutions of the present disclosure, without departing from the spirit and scope of the technical solutions of the present disclosure, shall fall within the scope of the claims of the present disclosure.

## Claims

1. A gamepad protective case (100), comprising a case body (10) and a grip member (20), wherein the case body (10) is configured to form a receiving cavity (30), a gamepad is detachably mounted in the receiving cavity (30), the grip member (20) is arranged on one side of the case body (10) in a first direction (X), and is detachably connected to the case body (10).

2. The gamepad protective case (100) according to claim 1, wherein a first sliding rail module (21) is arranged on a side of the grip member (20) that is close to the case body (10), a second sliding rail module (11) is arranged on a side of the case body (10) that is close to the grip member (20), the first sliding rail module (21) is connected to the second sliding rail module (11) by means of sliding rails, the grip member (20) is detachably connected to the case body (10), the grip member (20) is mounted on the case body (10) in a second direction (Y) which is perpendicular to the first direction (X).

3. The gamepad protective case (100) according to claim 2, wherein the first sliding rail module (21) comprises two first sliding rail portions (211) which are arranged symmetrically with respect to the second direction (Y), the second sliding rail module (11) comprises two second sliding rail portions (111) which are arranged symmetrically with respect to the second direction (Y), and the two first sliding rail portions (211) are respectively connected to the two second sliding rail portions (111) by means of sliding rails, such that the grip member (20) is detachably connected to the case body (10);
each first sliding rail portion (211) comprises a first sliding rail main body (2111) and a first transverse limiting portion (2112), and the first sliding rail main body (2111) is arranged between the first transverse limiting portion (2112) and the grip member (20);
each second sliding rail portion (111) includes a second sliding rail main body (1111) and a second transverse limiting portion (1112), and the second sliding rail main body (1111) is arranged between the second transverse limiting portion (1112) and the case body (10).

4. The gamepad protective case (100) according to claim 3, wherein the first transverse limiting portions (2112) extend at least partially toward the second sliding rail main bodies (1111), the second transverse limiting portions (1112) extend at least partially toward the first sliding rail main bodies (2111), and when the grip member (20) is mounted on the case body (10), the first transverse limiting portions (2112) are fitted into spaces between the second transverse limiting portions (1112) and the case body (10), such that the first sliding rail portions (211) and the second sliding rail portions (111) are connected by means of sliding rails.

5. The gamepad protective case (100) according to claim 4, wherein a first longitudinal limiting portion (2113) is provided at an end of each first sliding rail main body (2111) in a direction opposite to the second direction (Y), and extends in an extending direction of the corresponding first transverse limiting portion (2112);
when the grip member (20) is mounted on the case body (10), an end of each second transverse limiting portion (1112) in the direction opposite to the second direction (Y) abuts against the corresponding first longitudinal limiting portion (2113).

6. The gamepad protective case (100) according to claim 4 or 5, wherein a second longitudinal limiting portion (1113) is provided at an end of each second sliding rail main body (1111) in the second direction (Y), and extends in an extending direction of the corresponding second transverse limiting portion (1112);
when the grip member (20) is mounted on the case body (10), an end of each first transverse limiting portion (2112) in the second direction (Y) abuts against the corresponding second longitudinal limiting portion (1113).

7. The gamepad protective case (100) according to claim 4, wherein a guide portion (1114) is provided at an end of each second sliding rail main body (1111) in the direction opposite to the second direction (Y), and extends at least partially in the direction opposite to the second direction (Y);
in a case where the two second transverse limiting portions (1112) extend toward each other, each guide portion (1114) extends at least partially in a direction away from the other second sliding rail portion (111);
in a case where the two second transverse limiting portions (1112) extend away from each other, each guide portion (1114) extends at least partially in a direction close to the other second sliding rail portion (111).

8. The gamepad protective case (100) according to claim 2, further comprising a latching module (40), wherein the latching module (40) is arranged on the side of the grip member (20) that is close to the case body (10), the latching module (40) is provided with a catching groove (44) which is open toward the case body (10), and a latching protrusion (13) is arranged on the side of the case body (10) that is close to the grip member (20);
when the grip member (20) is mounted on the case body (10) in the second direction (Y), the latching protrusion (13) is fitted into the catching groove (44) to limit displacement of the grip member (20) in the second direction (Y).

9. The gamepad protective case (100) according to claim 8, wherein the latching module (40) comprises a connecting portion (41) and a latching portion (43), the connecting portion (41) is arranged on a side of the grip member (20) that is close to the case body (10), the latching portion (43) is arranged at an end of the connecting portion (41) that is close to the case body (10), and extends at least partially in the second direction (Y), and the catching groove (44) is arranged in the latching portion (43), and is located close to an end of the latching portion (43) that is away from the connecting portion (41).

10. The gamepad protective case (100) according to claim 8, wherein in the second direction (Y), the dimension, in the first direction (X), of an end of the latching portion (43) that is away from the connecting portion (41) is gradually reduced.

11. The gamepad protective case (100) according to claim 3, wherein the first sliding rail portion (211) and the second sliding rail portion (111) are in interference fit, so as to limit displacement of the grip member (20) in the second direction (Y).

12. The gamepad protective case (100) according to claim 11, wherein a side of each first transverse limiting portion (2112) that is close to the corresponding second transverse limiting portion (1112) is fitted against the second transverse limiting portion (1112), and each first sliding rail main body (2111) deforms in a direction away from the corresponding second sliding rail main body (1111), such that the first sliding rail portion (211) and the second sliding rail portion (111) are in interference fit.

13. The gamepad protective case (100) according to claim 11, wherein a side of each first transverse limiting portion (2112) that is close to the corresponding second transverse limiting portion (1112) is fitted against the second transverse limiting portion (1112), and each second sliding rail main body (1111) deforms in a direction away from the corresponding first sliding rail main body (2111), such that the first sliding rail portion (211) and the second sliding rail portion (111) are in interference fit.

14. The gamepad protective case (100) according to claim 3, wherein a cavity (23) is formed on a side of the grip member (20) that is close to the case body (10), so that the thickness of the grip member (20) remains uniform; the first sliding rail portions (211) and the second sliding rail portions (111) are both arranged in the cavity (23), and the two first sliding rail main bodies (2111) both extend toward the case body (10), such that when the grip member (20) is mounted on the case body (10), the first transverse limiting portions (2112) are fitted into spaces between the second transverse limiting portions (1112) and the case body (10).

15. The gamepad protective case (100) according to claim 14, wherein two first sliding rail reinforcing ribs (2114) are arranged on a side of each first sliding rail main body (2111) that faces away from the other first sliding rail main body (2111), and the two first sliding rail reinforcing ribs (2114) are respectively arranged at two opposite ends of the first sliding rail main body (2111) in the second direction (Y), and both extend in a direction away from the other first sliding rail main body (2111) to a side wall of the cavity (23).
